(19) **Europäisches Patentamt**
**European Patent Office**
**Office européen des brevets**

(11) **EP 1 964 874 B1**

(12) **EUROPEAN PATENT SPECIFICATION**

(45) Date of publication and mention
of the grant of the patent:
**09.09.2009  Bulletin 2009/37**

(51) Int Cl.:
**C08J 5/22** (2006.01)          **H01M 8/02** (2006.01)
**H01M 8/10** (2006.01)

(21) Application number: **07102134.9**

(22) Date of filing: **12.02.2007**

(54) **Method for fabricating a proton exchange membrane**

Verfahren zur Herstellung einer Protonenaustauschmembran

Procédé pour la fabrication d'une membrane échangeuse de protons

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**03.09.2008  Bulletin 2008/36**

(73) Proprietor: **Atomic Energy Council - Institute of Nuclear**
**Energy Research**
**Lungtan, Taoyuan,**
**Taiwan (TW)**

(72) Inventors:
• **Chang, Hwei-Lang**
**325, Longtan Shiang, Taoyuan County (TW)**

• **Tsao Chen-Si**
**325, Longtan Shiang, Taoyuan County (TW)**
• **Chang Hen-Rong**
**324, Pingzhen City, Taoyuan County (TW)**
• **Shieh, Kuo-Lon**
**325, Longtan Shiang, Taoyuan County (TW)**
• **Cheng, Pi-Hsin**
**320, Zhongli City, Taoyuan County (TW)**

(74) Representative: **Beck, Michael Rudolf et al**
**Beck & Rössig**
**Cuvilliésstrasse 14**
**81679 München (DE)**

(56) References cited:
**EP-A- 1 742 286          WO-A-00/49069**
**US-A- 5 128 014          US-A- 5 330 626**
**US-A1- 2005 049 320      US-A1- 2005 107 490**

**Description**

**Field of the invention**

The present invention relates to fabricating a proton exchange membrane (PEM); more particularly, relates to using a PEM having sulfonic acid group (-SO$_3$H) as an end group of a branch chain; or a precursor having sulfonamide fluoride group (-SO$_2$F) as an end group of a branch chain to be processed through an ionizing radiation to obtain a PEM having high methanol barring and proton conductivity and which is suitable for direct methanol fuel cells.

**Description of the Related Arts**

A general proton exchange membrane fuel cell (PEMFC) having a polymer film does not conquer the difficulties in storing and transporting its fuel. Yet, a direct methanol fuel cell (DMFC) is easy in storing and transporting its fuel, so it becomes a potential to share or even replace the market of PEMFC. However, DMFC has key technologies for improving which relate to catalyst improvement, and methanol confinement of PEM. PEM in the market (like Nafion series by Du Pont Co.) usually do not have a good methanol confinement; and so too much methanol at the fuel-side electrode (anode) passes through the PEM to the gas-side electrode (cathode). Such a situation causes the following big problems: (i) fuel waste; (ii) cathode catalyst poisoning; and (iii) mixed potential power loss.

To make things better, the following methods are used: (1) adding a confining layer: (2) using a combined film; (3) grafting a copolymer; and (4) using a polymer of high-temperature phosphorous and nitrogen compound or aromatic hydrocarbon having a main ring chain. Results of these methods usually improves methanol barring while diminishes proton conductivity. In order to maintain methanol barring without sacrificing proton conductivity, relational selective coefficient becomes another standard for evaluating the PEM for DMFC. The relational selective coefficient is a product of proton conducting coefficient and methanol barring coefficient relating to those of an original material. A higher relational selective coefficient means a better methanol barring coefficient as well as proton conducting coefficient.

Regarding the confining layer, the combined film and the graft copolymer, related materials have to be added to the original PEM, which makes the process complex. Regarding the polymer of high-temperature phosphorous and nitrogen compound or aromatic hydrocarbon having a main ring chain, the original material is different and the film made is only suitable to be operated under high temperature for proton conducting. Hence, the prior arts do not fulfill users' requests on actual use.

US 5,330,626 discloses a process for modifying a fluorinated ion exchange membrane by irradiation with a non-spark-producing radiation to increase water absorption and ionic conductivity. The suggested total dose ranges from 10 to 100 kGy. Increasing water absorption, and thus increased conductivity are obtained at higher doses. US 5,330,626 suggests 50 kGy as an optimum. Methanol barring properties are unclear.

US 2005/0049320 A1 is related to a similar technical problem as the present invention. The solution suggested in US 2005/0049320 A1 resides in first making nano-holes in a substrate through a first radiation step and then irradiating the substrate with ionizing radiation so that a functional monomer is grafted or co-grafted on a surface of the film and within the nano-holes. The method of making according to US 2005/0049320 A1 is highly elaborate and complicated as it requires two radiation steps plus additional functional monomers.

EP 1 742 286 A1 is related to a similar technical problem as the present invention. The solution suggested in EP 1 742 286 A1 is a polymer electrolyte membrane produced by a process in which a monofunctional vinyl monomer into which sulfonic acid groups can be introduced and a vinyl monomer having a halogen at a terminal are co-grafted into a polymer base film that has been exposed to an ionizing radiation. The base film is exposed to a second ionizing radiation and/or heat treated so that the terminal halogen is eliminated to introduce a crosslinking structure in which the graft molecular chains are bound together. This method again is complicated. Further, EP 1 742 286 A1 discloses an irradiation rate of 10-20 kGy/h and total dose of 5-500 kGy.

US 2005/0107490 A1 and WO 00/49069 A1 are related to PEMs and disclose the general idea of exposing fluoropolymers to irradiation. US 2005/0107490 A1 teaches total doses in a range of 10 to 150 kGy while higher doses are said to be preferable. WO 00/49069 A1 teaches total doses in a range of 50 to 1500 kGy.

**Summary of the invention**

The technical problem underlying the present invention is to provide a PEM having improved methanol barring together with high proton conductivity, i.e.a high relational selective coefficient, and a simplified fabrication method.

To achieve the above purpose, the present invention provides a method according to claim 1 and, alternatively, according to claim 4.

Advantageous embodiments are laid down in further claims.

The method for fabricating a PEM having a high relational selective coefficient uses an ionizing radiation of gamma ray having a dose of 0.1 to 50kGy which is applied to a PEM or a precursor of a yet-ionized PEM; the irradiated precursor is processed through an ionization with an alkaline washing, a water washing and an acid washing to obtain a PEM having increased methanol barring; the PEM is a fluorocarbon polymer; the fluorocarbon polymer has a sulfonic acid group as an end group of a branch chain; the precursor is an intermediate product on fabricating the fluorocarbon polymer and has an end group of a branch chain which is sulfonamide fluoride group ($-SO_2F$), sulfonamide chloride group ($-SO_2Cl$) or sulfonamide bromide group ($-SO_2Br$); the alkaline washing is to soak or wash with a solution having an alkali metal hydroxide; the acid washing is to soak or wash with a solution having an inorganic strong acid of sulfuric acid ($H_2SO_4$), nitric acid ($HNO_3$) or hydrochloric acid (HCl); and the present invention is applied to a DMFC or H01M008/10 fuel cell with improved methanol barring, easy fabrication and no additional material required. Accordingly, a novel method for fabricating a PEM having a relational selective coefficient is obtained.

## Brief description of the drawings

The present invention will be better understood from the following detailed descriptions of the preferred embodiments according to the present invention, taken in conjunction with the accompanying drawings, in which

FIG.1 is the flow view showing the first preferred embodiment according to the present invention;

FIG.2 is the view showing the PEM having a relational selective coefficient;

FIG.3 is the flow view showing the second preferred embodiment;

FIG.4 is the view showing the methanol conducting device; and

FIG.5 is the view showing the comparison of the relational selective coefficients.

## Description of embodiments

The following descriptions of the preferred embodiments are provided to understand the features and the structures of the present invention.

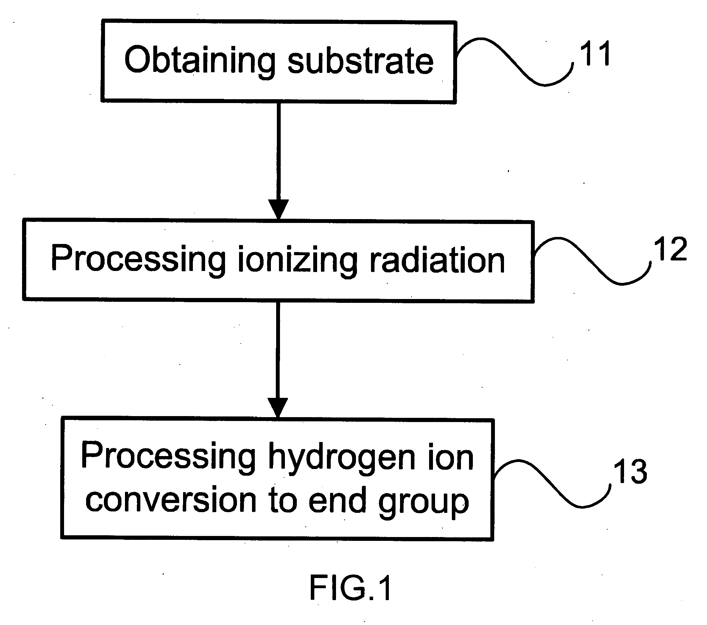

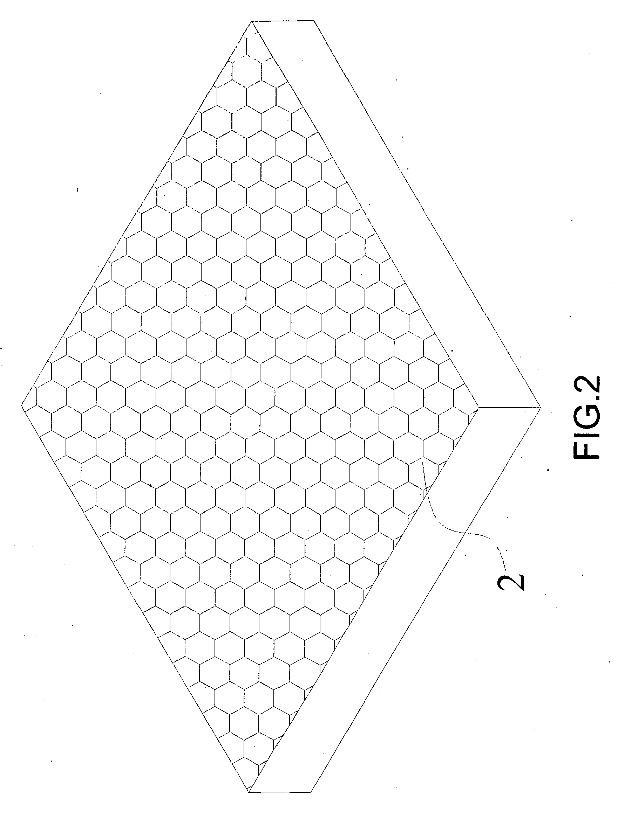

Please refer to FIG.1 and FIG.2, which are a flow view showing the first preferred embodiment and a view showing a proton exchange membrane (PEM) having a relational selective coefficient according to the present invention. As shown in the figures, the present invention is a method for fabricating a proton exchange membrane, comprising the following steps:

(a) Obtaining substrate 11: A substrate of a precursor made of a fluorocarbon polymer is obtained, where the precursor is an intermediate product on fabricating the fluorocarbon polymer; the fluorocarbon polymer has an end group of a branch chain; and the end group is a sulfonamide fluoride group (-SO2F), a sulfonamide chloride group (-SO2Cl) or a sulfonamide bromide group (-SO2Br).

(b) Processing ionizing radiation 12: The substrate is processed through an ionizing radiation, where the ionizing radiation has a total radiation dose less than 50 kilo-grays (kGy); the ionizing radiation has an irradiation rate less than 5 kGy per hour (kGy/h); and the ionizing radiation uses X ray or gamma ray, which can be cobalt-60 (Co-60) gamma ray.

(c) Processing hydrogen ion conversion to end group 13: The substrate is processed through a hydrogen ion conversion with an alkaline washing, a water washing and an acid washing to convert the end group of a sulfonamide fluoride group into the end group of a sulfonic acid group (-SO3H) to obtain a PEM 2 having a relational selective coefficient. Therein, the alkaline washing uses an alkali metal hydroxide for soaking or washing; and the acid washing uses an inorganic strong acid of sulfuric acid (H2SO4), nitric acid (HNO3) or hydrochloric acid (HCl) for soaking or washing.

The substrate is Nafion R1100 having a sulfonamide fluoride group, which is pressed by a hot roller or a hot pressor between 180 Celsius degrees (°C) into a film having a thickness of 0.18 millimeter (mm).

The ionizing radiation comprises the following steps: (i) the Nafion R1100 film is cut into a piece of 5cm(centimeter)x5cm; (ii) the film is put into a polyethylene (PE) zip-lock bag; and (iii) the film is irradiated by a gamma ray. When the radiation dose reaches 100kGy, the film is apt to be worn out. Hence, the maximum radiation dose for the present invention is 50kGy.

The hydrogen ion conversion comprises the following steps: (i) the irradiated Nafion R1100 film is washed with pure water; (ii) the film is soaked in a solution under 80°C for two hours (hr), where the solution comprises 15% potassium hydroxide (KOH), 35% Dimethyl sulfoxide (DMSO) and 50% water ($H_2O$); and the soaking is repeated with the solution refreshed for at least two times; (iii) the film is washed with a deionized pure water and is soaked under 80°C in the water for 30 minutes (min), and this step is repeated for at least two times; (iv) the film is soaked in a solution having 15% $HNO_3$ under 80°C for 1hr and then is washed, and this step is repeated at least three times to ensure the conversion of the end group from sulfonamide fluoride group into sulfonic acid group.

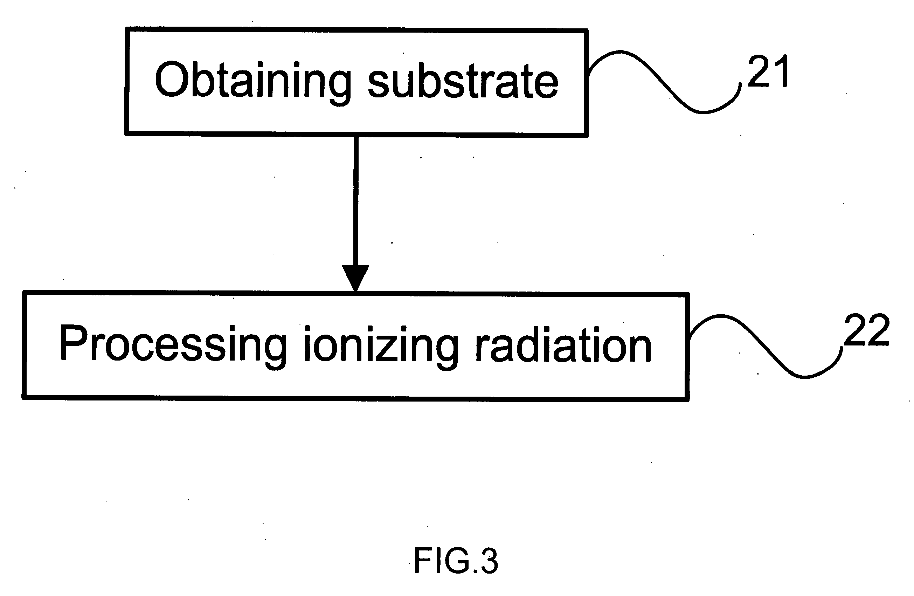

Please refer to FIG.3 and FIG.2, which are a flow view showing a second preferred embodiment; and the view showing the PEM having a relational selective coefficient. As shown in the figures, a second embodiment according to the present invention comprises the following steps:

(a) Obtaining substrate 21: A substrate of a fluorocarbon polymer having an end group of a branch chain is obtained, where the end group is a sulfonic acid group ($-SO_3H$).

(b) Processing ionizing radiation 22: The substrate is processed through an ionizing radiation to obtain a PEM 2 having a relational selective coefficient, where the ionizing radiation has a total radiation dose less than 50kGy; the ionizing radiation has an irradiation rate less than 5kGy/h; and the ionizing radiation uses X ray or gamma ray, which can be Co-60 gamma ray. Thus, a PEM 2 having a relational selective coefficient is obtained.

The substrate is Nafion 117 having a sulfonamide fluoride group, which is pressed between 180°C by a hot roller or a hot pressor into a film having a thickness of 0.18mm.

The ionizing radiation comprises the following steps: (i) the Nafion R1100 film is cut into a piece of 5cm×5cm; (ii) the film is put into a PE zip-lock bag; and (iii) the film is irradiated by a gamma ray.

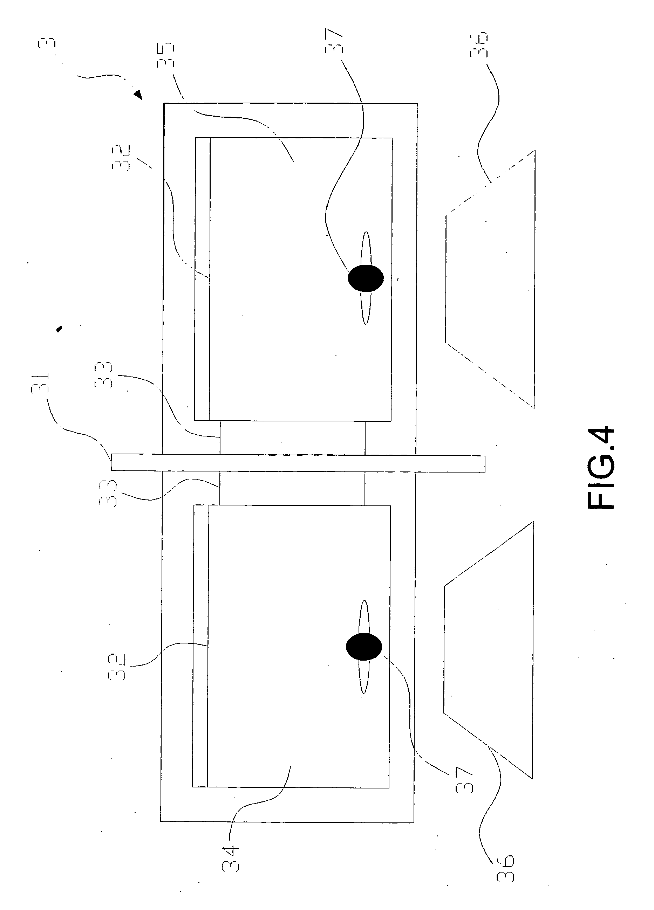

Please refer to FIG.4, which is a view showing a methanol conducting device. As shown in the figure, a diffusion function of a PEM is measured according to a method by T. A. Zawodzinski, Jr for proton conducting coefficients of irradiated films of Nafion R1100 and Nafion 117 and non-irradiated films of Nafion 117. The proton conducting coefficients are measured with an alternating-current (AC) impedance under a 90% relative humidity (RH) and a 50°C temperature.

The irradiated films of Nafion R1100 and Nafion 117 and the non-irradiated films of Nafion 117 are washed with deionize water twice and are soaked in the water for one day. The films are taken out and are clipped together with a clip to be put into a constant temperature humidistat made by Yeow Long Co. for one day. Hence, a balance between the films and the environment in temperature is achieved. Then the clip is connected with the AC impedance, which is Parstat 2263 by Princeton Applied Research, to measure impedances at high frequency and to figure out proton conducting coefficients of irradiated films of Nafion R1100 and Nafion 117 and non-irradiated films of Nafion 117 according to the method by T. A. Zawodzinski, Jr.

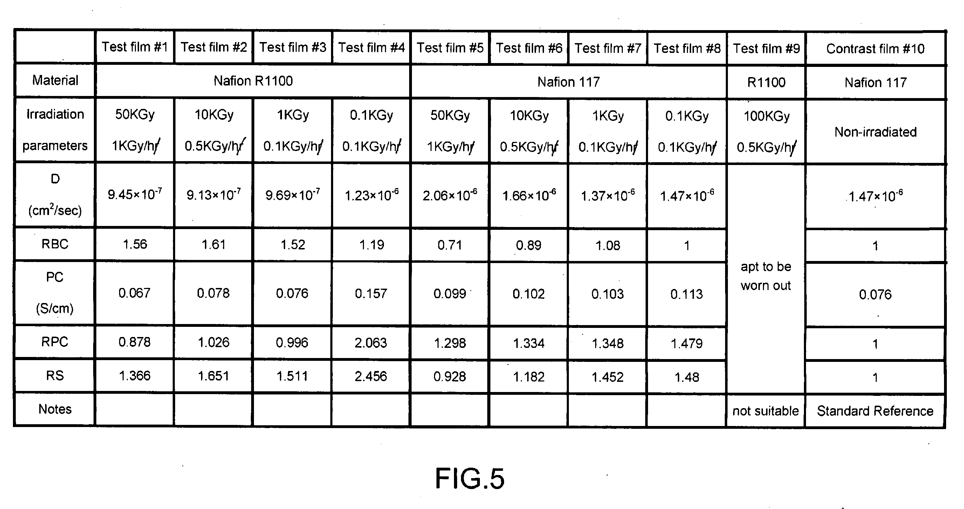

Please refer to FIG.5, which is a view showing a comparison of relational selective coefficients. As shown in the figure, relational selective coefficients of irradiated films of Nafion R1100 and Nafion 117 and non-irradiated films of Nafion 117 are ratios of proton conducting coefficients of irradiated films of Nafion R1100 and Nafion 117 and non-irradiated films of Nafion 117 (PCIrradiatedFilm) to the proton conducting coefficient of non-irradiated films of Nafion 117 (PCNon-irradiatedFilm), whose formula are expressed as follows:

$$RPC = \frac{PC_{IrradiatedFilms}}{PC_{Non-irradiatedFilms}} \qquad (formula\#1)$$

When a proton conducting coefficient is bigger, protons pass through a film easier; on the contrary, the smaller, the harder. On the occasion when a relational selective coefficient is smaller than 1, it is harder for the protons to pass through a film than to pass through Nafion 117.

The irradiated films of Nafion R1100 and Nafion 117 and the non-irradiated films of Nafion 117 are obtained as test films 31 separately to be put between two methanol conducting devices 3 having a 75 $cm^3$ solution level 32. Each test film 31 is clipped between two end surfaces by two end plates of the methanol conducting devices 3 separately, where each of the end plates has an opening having a 4cm diameter. The solution at left side 34 is a water solution contains 2% n-butanol (a standard solution for a gas chromatography (GC) concentration analysis); and the solution at right side 35 is a water solution contains 10% methanol and 2% n-butanol. After being stirred by a Teflon magnetic stir bar 13 with a magnetic stirrer 36 for a period of time, because the solution at the right side has a higher ratio of methanol, the methanol crosses over the test film to be diffused into the solution at the left side. Between intervals of a certain period of time, the solutions at the two sides are obtained at a quantity of 1 micro-liter ($\mu$l) separately for a GC process with a reference to an absorption peak area of a standard methanol/n-butanol solution to obtain a relationship between a methanol concentration and time. With the data of methanol concentration and time, a methanol diffusion coefficient (D) is obtained according to Fick's diffusion law. The corresponding mathematical equation for this case is as follows:

$$\ln\left(1-\frac{C}{Co/2}\right)=(-2AD/V\theta)t \dots\dots\dots\dots\dots\dots\dots\dots\dots\dots\dots\dots\dots formula\#2$$

Therein, C is a methanol concentration measured; C0 is an initial concentration at the diffusing side; V is a volume of the methanol solution; A is a diffusion area of the test film; $\theta$ is a thickness of the test film; and, D is the methanol diffusion coefficient of the test film.

For comparing methanol confining capabilities of test films, the non-irradiated Nafion 117 is used as a referring standard and a relational barring coefficient (RBC) is defined as a reciprocal of a ratio of a methanol diffusion coefficient of an irradiated film of Nafion R1100 or Nafion 117 ($D_{TestFilm}$) to a methanol diffusion coefficient of a non-irradiated film of Nafion 117 ($D_{Non\text{-}irradiatedFilm}$), whose formula is shown as follows:

$$RBC=\frac{D_{Non\text{-}irradiatedFilm}}{D_{TestFilm}} \dots\dots\dots\dots\dots\dots\dots\dots\dots\dots\dots\dots\dots formula\#3$$

A bigger relational barring coefficient means a better methanol barring capability; on the contrary, the smaller, the worse. On the occasion when a relational barring coefficient is smaller than 1, the test film having the methanol barring coefficient has a worse methanol barring capability than that of Nafion 117.

The relational selective coefficient (RS) of a test film is a product of its proton conducting coefficient and methanol barring coefficient relating to those of Nafion 117, whose formula is shown as follows:

$$RS=RPC\times RBC \dots\dots\dots\dots\dots\dots\dots\dots\dots\dots\dots\dots\dots\dots\dots\dots\dots formula\#4$$

A bigger relational selective coefficient means a better combination of methanol barring and proton conductivity.

Test film #1 is irradiated with a Co-60 gamma ray, which has an irradiation rate of 1kGy/h, an irradiation time of 50h and a total irradiating dose of 50kGy; and the following data are obtained: PC=0.067S/cm, RPC=0.878, D=9 . 4 5 $\times$ 10$^{-7}$ cm$^2$ / sec, RBC=1.56 and RS=1.366. On comparing to contrast film #10 of a non-irradiated Nafion 117, its relational barring coefficient concerning methanol barring is 1.56, which has a 56% improvement. Although the proton conducting coefficient is reduced a little, its relational selective coefficient, reflecting its whole performance, is 1.366, which has a 36.6% improvement. On comparing to test film #5, which is not a precursor irradiated but is acidified Nafion 117 irradiated by gamma ray with the same dose and rate, test film #1 has better values of D, RBC and RS.

Test film #2 has an irradiation rate of 0.5 kGy/h, an irradiation time of 20h and a total irradiating dose of 10kGy; and the following data are obtained: PC=0.078S/cm, RPC=1.026, D=9 . 13 $\times$ 10$^{-7}$ cm$^2$ / sec, RBC=1.64 and RS=1.651. On comparing to contrast film #10, its relational barring coefficient concerning methanol barring is 1.61, which has a 61 % improvement. Although the proton conducting capability is the same, its relational selective coefficient, reflecting its whole performance, is 1.651, which has a 65.1% improvement. On comparing to test film #6, test film #2 has better values of D, RBC and RS.

Test film #3 has an irradiation rate of 0.1kGy/h, an irradiation time of 10h and a total irradiating dose of 1kGy; and the following data are obtained: PC=0.076S/cm, RPC=0.996, D= 9 . 69 $\times$ 10$^{-7}$ cm$^2$/sec, RBC=1.52 and RS=1.511. On comparing to contrast film #10, its relational barring coefficient is 1.52, which has a 52% improvement. Although the proton conducting capability is the same, its relational selective coefficient is 1.511, which has a 51.1 % improvement. On comparing to test film #7, test film #3 has better values of D, RBC and RS.

Test film #4 has an irradiation rate of 0.1kGy/h, an irradiation time of 1h and a total irradiating dose of 0.1 kGy; and the following data are obtained: PC=0.157S/cm, RPC=2.063, D= 1.23 $\times$ 10$^{-6}$ cm$^2$ / sec, RBC=1.19 and RS=2.456. On comparing to contrast film #10, its relational barring coefficient is 1.19, which has a 19% improvement. Test film #4 has a better proton conducting capacity with a relational selective coefficient of 2.456, which has a 145% improvement. On comparing to test film #8, test film #4 has better values of D, RBC and RS.

Test film #5 is Nafion 117, not a precursor, irradiated by gamma ray in the same way as test film#1; and the following data are obtained: PC=0.099S/cm, RPC=1.298, D=$2.06\times10^{-6}$cm$^2$/sec, RBC=0.71 and RS=0.928.

Test film #6 is non-precursor Nafion 117 irradiated by gamma ray in the same way as test film#2; and the following data are obtained: PC=0.102S/cm, RPC=1.334, D=$1.66\times10^{-6}$cm$^2$/sec, RBC=0.89 and RS=1.128.

Test film #7 is non-precursor Nafion 117 irradiated by gamma ray in the same way as test film#3; and the following data are obtained: PC=0.103S/cm, RPC=1.348, D=$1.37\times10^{-6}$cm$^2$/sec, RBC=1.08 and RS=1.452.

Test film #8 is non-precursor Nafion 117 irradiated by gamma ray in the same way as test film#4; and the following data are obtained: PC=0.113S/cm, RPC=1.479, D=$1.47\times10^{-6}$cm$^2$/sec, RBC=1 and RS=1.48.

Test film #9 has an irradiation rate of 0.5kGy/h, an irradiation time of 200h and an irradiation dose of 100kGy. As a result, the film is apt to be worn out, no more suitable for analysis.

Contrast film #10 is a standard contrast set, which is a non-irradiated Nafion 117; and the following data for reference are obtained: PC=0.075S/cm and D=$1.47\times10^{-6}$ cm$^2$/sec

The above test films of Nafion R1100 having various radiation rates have lower methanol diffusion coefficients than that of non-irradiated Nafion 117. A lower methanol diffusion coefficient means a better methanol barring, where the Nafion R1100 irradiated with a rate of 0.5kGy/h and a dose of 10kGy has a best relational barring coefficient (RBC=1.61) and the barring achieves a 61% improvement than that of Nafion 117.

To sum up, the present invention is a method for fabricating a proton exchange membrane having a high relational selective coefficient, where methanol diffusion coefficient is diminished; methanol barring is improved; relational selective coefficient is increased; and the method is easy and is suitable for fabricating a film in a fuel cell using methanol.

**Claims**

1. A method for fabricating a proton exchange membrane (PEM) for a fuel cell using methanol, comprising steps of:

   (a) obtaining a substrate of a precursor, said precursor being an intermediate product on fabricating a PEM made of a fluorocarbon polymer before ionizing;
   (b) processing an ionizing radiation to said substrate, wherein said ionizing radiation has an irradiation rate from 0.1 to 1.0 kGy/h with a total dose between 0.1 to 50 kGy; and
   (c) processing a hydrogen ion conversion to an end group of a branch chain of said precursor through an alkaline washing, a water washing and an acid washing to obtain a PEM , wherein said end group is selected from a group consisting of a sulfonamide fluoride group (-SO$_2$F), a sulfonamide chloride group (-SO$_2$Cl) and a sulfon-amide bromide group (-SO$_2$Br).

2. The method according to claim 1, wherein said alkaline washing consists in soaking or washing with a solution having an alkali metal hydroxide.

3. The method according to f claim 1 or 2,
   wherein said acid washing consists in soaking or washing with a solution having an inorganic strong acid; which is selected from a group consisting of sulfuric acid (H$_2$SO$_4$), nitric acid (HNO$_3$) and hydrochloric acid (HCl).

4. A method for fabricating a PEM of a fuel cell using methanol, comprising steps of:

   (a) obtaining a substrate of a PEM made of a fluorocarbon polymer, wherein an end group of a branch chain of said fluorocarbon polymer is sulfonic acid group (-SO$_3$H); and
   (b) processing an ionizing radiation to said substrate, wherein said ionizing radiation has an irradiation rate from 0.1 to 1.0 kGy/h with a total dose between 0.1 to 50 kGy.

5. The method according to one of claims I to 4, wherein said ionizing radiation has an irradiation rate in the range of 0.5 to 1 kGy/h for a total radiation dose from 10 to 50 kGy, an irradiation rate in the range of 0.1 to 0.5 kGy/h for a total radiation dose from 1 to 10 kGy, and an irradiation rate of 0.1 kGy/h for a total radiation dose from 0.1 to 1 kGy.

6. The method according to one of claims 1 to 5, wherein said ionizing radiation uses X-rays.

7. The method according to one of claims 1 to 5, wherein said ionizing radiation uses gamma rays.

8. The method according to claim 8, wherein said gamma rays are Co-60 gamma rays.

**Patentansprüche**

1. Verfahren zur Herstellung einer Proton-Austausch-Membran (PEM) für eine mit Methanol betriebene Brennstoffzelle, umfassend die Schritte:

   (a) Bereitstellen eines Substrats aus einem Vorprodukt, wobei das Vorprodukt ein Zwischenprodukt bei der Herstellung einer PEM aus einem Fluorkolnlenstoff Polymer vor einem Tonisieren ist;
   (b) Beaufschlagen des Substrats mit einer ionisierenden Strahlung, wobei die ionisierende Strahlung eine Energiedosisleistung von 0,1 bis 1,0 kGy/h und eine Gesamtenergiedosis zwischen 0,1 bis 50 kGy aufweist;
   (c) Ausführen einer Wasserstoffionumwandlung an einer Endgruppe einer Verzweigungskette des Vorläufers durch ein alkalisches Waschen, ein Waschen mit Wasser und ein saures Waschen, um eine PEM zu erhalten, wobei die Endgruppe ausgewählt ist aus einer Gruppe bestehend aus einer Sulfonamidfluoridgruppe ($-SO_2F$), einer Sullonamidchloridgruppe ($-SO_2Cl$) und einer Sulfonamidbromidgruppe ($-SO_2Br$).

2. Verfahren nach Anspruch 1, bei dem das alkalische Waschen in einem Durchtränken oder Waschen mit einer Lösung besteht, die ein Alkalimetallhydroxid aufweist.

3. Verfahren nach Anspruch 1 oder 2, bei dem das saure Waschen in einem Durchtränken oder Waschen mit einer Lösung besteht, die eine anorganische starke Säure aufweist, welche aus einer Gruppe ausgewählt ist, die aus Schwefelsäure ($H_2SO_4$), Salpetersäure ($HNO_3$) und Salzsäure (HCl) besteht.

4. Verfahren zur Herstellung einer PEM für eine mit Methanol betriebene Brennstoffzelle, umfassend die Schritte:

   (a) Bereitstellen eines Substrats einer PEM aus einem Fluorkohlenstoff-Polymer, wobei eine Endgruppe einer Verzweigungskette des Fluorkohlenstoff"Polymers eine Sulfonsäuregruppe ($-SO_2H$) ist; und
   (b) Beaufschlagen des Substrats mit einer ionisierenden Strahlung, wobei die ionisierende Strahlung eine Energiedosisleistung von 0,1 bis 1,0 kGy/h und eine Gesamtenergiedosis zwischen 0,1 bis 50 kGy aufweist;

5. Verfahren nach einem der Ansprüche 1 bis 4, bei dem die ionisierende Strahlung eine Energiedosisleistung im Bereich von 0,5 bis 1,0 kGy/h bei einer Gesamtenergiedosis von 10 bis 50 kGy, eine Energiedosisleistung im Bereich von 0,1 bis 0,5 kGy/h bei einer Gesamtenergiedosis von 1 bis 10 kGy und eine Energiedosisleistung von 0,1 kGy/h bei einer Gesamtenergiedosis von 0,1 bis 1 kGy aufweist.

6. Verfahren nach einem der Ansprüche 1 bis 5, bei dem die ionisierende Strahlung Röntgenstrahlen verwendet.

7. Verfahren nach einem der Ansprüche 1 bis 7, bei dem die ionisierende Strahlung Gammastrahlen verwendet.

8. Verfahren nach Anspruch 7, bei dem die Gammastrahlen Co-60 Gammastrahlen sind.

**Revendications**

1. Procédé pour la fabrication d'une membrane échangeuse de protons (PEM) pour une cellule électrochimique utilisant du méthanol comprenant les étapes:

   (a) d'obtention d'un substrat d'un précurseur, ledit précurseur étant un produit intermédiaire de la fabrication d'une membrane échangeuse de protons faite d'un polymère fluorocarboné avant ionisation;
   (b) d'exécution d'un rayonnement ionisant sur ledit substrat dans lequel le rayonnement ionisant a un taux d'irradiation de 0,1 à 1,0 kGy/h avec une dose totale entre 0,1 et 50kGy; et
   (c) d'exécution d'une conversion d'ions d'hydrogène en un groupe terminal d'une chaîne de branche dudit précurseur par un lavage alcalin, un lavage à l'eau et un lavage à l'acide pour obtenir une PME, dans lequel ledit groupe terminal est sélectionné parmi un groupe consistant en un groupe au fluoride de sulfonamide ($-SO_2F$), un groupe au chloride de sulfonamide ($-SO_2Cl$) et un groupe au bromide de sulfonamide ($SO_2Br$).

2. Procédé selon la revendication 1 dans lequel ledit lavage alcalin consiste en faisant tremper ou en lavant avec une solution ayant un hydroxyde de métal alcalin.

3. Procédé selon la revendication 1 ou 2 dans lequel ledit lavage acide consiste en faisant tremper ou en lavant avec une solution ayant un acide inorganique fort qui est sélectionné parmi un groupe consistant en l'acide sulfurique ($H_2SO_4$), l'acide nitrique ($HNO_3$) et l'acide chlorhydrique (HCl).

4. Procédé pour la fabrication d'une membrane échangeuse de protons d'une cellule électrochimique utilisant du méthanol comprenant les étapes:

   (a) d'obtention d'un substrat d'une PME faite d'un polymère fluorocarboné dans lequel un groupe terminal d'une chaîne de branche du polymère fluorocarboné est un groupe acide sulfonique (-$SO_3H$); et
   (b) d'exécution d'un rayonnement ionisant sur ledit substrat dans lequel le rayonnement ionisant a un taux d'irradiation de 0,1 à 1,0 kGy/h avec une dose totale entre 0,1 et 50 kGy.

5. Procède selon l'une des revendications 1 à 4 dans lequel ledit rayonnement ionisant a un taux d'irradiation de l'ordre de 0,5 à 1 kGy/h pour une dose de radiation totale de 10 à 50 kGy, un taux d'irradiation de l'ordre de 0,1 à 0,5 kGy/h pour une dose de radiation totale d' 1 à 10 kGy et un taux d'irradiation de 0,1 kGy pour une dose de radiation totale de 0,1 à 1 kGy.

6. Procédé selon l'une des revendications 1 à 5 dans lequel ledit rayonnement ionisant utilise des rayons X.

7. Procédé selon l'une des revendications 1 à 5 dans lequel le rayonnement ionisant utilise des rayons gamma.

8. Procédé selon la revendication 7 dans lequel les rayons gamma sont des rayons gamma du 60 Co.

FIG.1

FIG.2

FIG.3

FIG.4

| | Test film #1 | Test film #2 | Test film #3 | Test film #4 | Test film #5 | Test film #6 | Test film #7 | Test film #8 | Test film #9 | Contrast film #10 |
|---|---|---|---|---|---|---|---|---|---|---|
| Material | Nafion R1100 | | | | Nafion 117 | | | | R1100 | Nafion 117 |
| Irradiation parameters | 50KGy 1KGy/h | 10KGy 0.5KGy/h | 1KGy 0.1KGy/h | 0.1KGy 0.1KGy/h | 50KGy 1KGy/h | 10KGy 0.5KGy/h | 1KGy 0.1KGy/h | 0.1KGy 0.1KGy/h | 100KGy 0.5KGy/h | Non-irradiated |
| D (cm²/sec) | $9.45 \times 10^{-7}$ | $9.13 \times 10^{-7}$ | $9.69 \times 10^{-7}$ | $1.23 \times 10^{-6}$ | $2.06 \times 10^{-6}$ | $1.66 \times 10^{-6}$ | $1.37 \times 10^{-6}$ | $1.47 \times 10^{-6}$ | apt to be worn out | $1.47 \times 10^{-6}$ |
| RBC | 1.56 | 1.61 | 1.52 | 1.19 | 0.71 | 0.89 | 1.08 | 1 | | 1 |
| PC (S/cm) | 0.067 | 0.078 | 0.076 | 0.157 | 0.099 | 0.102 | 0.103 | 0.113 | | 0.076 |
| RPC | 0.878 | 1.026 | 0.996 | 2.063 | 1.298 | 1.334 | 1.348 | 1.479 | | 1 |
| RS | 1.366 | 1.651 | 1.511 | 2.456 | 0.928 | 1.182 | 1.452 | 1.48 | | 1 |
| Notes | | | | | | | | | not suitable | Standard Reference |

FIG.5

EP 1 964 874 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5330626 A
- US 20050049320 A1
- EP 1742286 A1
- US 20050107490 A1
- WO 0049069 A1